(19)

Europäisches
Patentamt

European
Patent Office

Office européen
des brevets

(11) **EP 4 498 644 A1**

(12) **EUROPEAN PATENT APPLICATION**

(43) Date of publication:
**29.01.2025 Bulletin 2025/05**

(21) Application number: **23187979.2**

(22) Date of filing: **27.07.2023**

(51) International Patent Classification (IPC):
**H04L 25/02** (2006.01)

(52) Cooperative Patent Classification (CPC):
**H04L 25/0204; H04L 25/022; H04L 25/0228;
H04L 25/024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventor: **QIU, Shuang
Stuttgart (DE)**

(74) Representative: **Nokia EPO representatives
Nokia Technologies Oy
Karakaari 7
02610 Espoo (FI)**

(54) **METHOD, APPARATUS AND COMPUTER PROGRAM**

(57) A method for determining an equivalent subband channel, the method comprising: obtaining, for the subband, at least two sub-channels; determining at least one phase difference with respect to the at least two sub-channels; compensating at least one of the at least two sub-channels based on the at least one phase difference with respect to the at least two sub-channels; and determining the equivalent subband channel based on the compensated at least one sub-channel of the at least two sub-channels.

Figure 6a

Subband channel averager
(equivalent subband channel estimator) 403

Average channel amplitude determiner 601

Phase difference determiner 603

Phase compensator 605

channel average determiner 607

**Description**

<u>Field</u>

The present application relates to a method, apparatus, and computer program for a wireless communication system.

<u>Background</u>

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

<u>Summary</u>

According to an aspect, there is provided an apparatus for determining an equivalent subband channel, the apparatus comprising means configured to perform: obtaining or selecting, for the subband, at least two sub-channels; determining at least one phase difference with respect to the at least two sub-channels; compensating at least one of the at least two sub-channels based on the at least one phase difference with respect to the at least two sub-channels; and determining the equivalent subband channel based on the compensated at least one sub-channel of the at least two sub-channels.

The equivalent subband channel may be such that there is a maximization of total correlation between the equivalent subband channel and the at least two sub-channels for the subband.

The means may be further configured to perform determining an average channel amplitude from the at least two sub-channels and wherein the means configured to perform determining the equivalent subband channel based on the compensated at least one sub-channel of the at least two sub-channels may be configured to perform determining the equivalent subband channel further based on the average channel amplitude from the at least two sub-channels.

The means configured to perform determining the at least one phase difference with respect to the at least two sub-channels may be configured to perform determining at least one direct phase difference between a first selected sub-channel from the at least two sub-channels and the remaining at least two sub-channels.

The means configured to perform compensating the at least one of the at least two sub-channels may be configured to perform: determining a phase compensation matrix comprising the at least one direct phase difference located on diagonals of an identity matrix; and generating at least one compensated sub-channel based on a multiplication of a selected sub-channel of the at least two sub-channels and the phase compensation matrix.

The means configured to perform determining the equivalent subband channel based on the compensated at least one sub-channel of the at least two sub-channels may be configured to perform arithmetically averaging the at least one compensated channel.

The means configured to perform compensating at least one of the at least two sub-channels based on the at least one phase difference with respect to the at least two sub-channels may further be configured to perform generating an initial compensated sub-channel from a first selected sub-channel of the at least two sub-channels for the subband.

The means configured to perform determining the at least one phase difference with respect to the at least two sub-channels may be configured to perform determining at least one iteration phase difference between a previous iteration compensated sub-channel and a current iteration sub-channel from the at least two sub-channels.

The current iteration channel from the at least two sub-channels may be a normalized sub-channel.

The means configured to perform compensating the at least one of the at least two sub-channels based on the at least one phase difference may be configured to perform applying the determined phase difference to the current iteration sub-channel and updating an average sub-channel with the phase compensated current iteration sub-channel.

The means may be further configured to perform generating a multiple-input-multiple-output precoding matrix based on the equivalent subband channel.

The means may be further configured to perform generating a channel prediction based on the equivalent subband channel.

According to an aspect, there is provided an apparatus for determining an equivalent subband channel, the apparatus comprising: at least one processor, and at least one memory storing instructions that, when executed by the at least one processor, cause the apparatus to perform: obtaining, for the subband, at least two sub-channels; determining at least one phase difference with respect to the at least two sub-channels; compensating at least one of the at least two sub-channels based on the at least one phase difference with respect to the at least two sub-channels; and determining the equivalent subband channel based on the compensated at least one sub-channel of the at least two sub-channels.

The equivalent subband channel may be such that there is a maximization of total correlation between the equivalent subband channel and the at least two sub-channels for the subband.

The apparatus may be further caused to perform determining an average channel amplitude from the at least two sub-channels and wherein the apparatus caused to perform determining the equivalent subband channel based on the compensated at least one sub-channel of the at least two sub-channels may be caused to perform determining the equivalent subband channel further based on the average channel amplitude from the at least two sub-channels.

The apparatus caused to perform determining the at least one phase difference with respect to the at least two sub-channels may comprise determining at least one direct phase difference between a first selected sub-channel from the at least two sub-channels and the remaining at least two sub-channels.

The apparatus caused to perform compensating the at least one of the at least two sub-channels may be caused to perform: determining a phase compensation matrix comprising the at least one direct phase difference located on diagonals of an identity matrix; and generating at least one compensated sub-channel based on a multiplication of a selected sub-channel of the at least two sub-channels and the phase compensation matrix.

The apparatus caused to perform determining the equivalent subband channel based on the compensated at least one sub-channel of the at least two sub-channels may be caused to perform arithmetically averaging the at least one compensated channel.

The apparatus caused to perform compensating at least one of the at least two sub-channels based on the at least one phase difference with respect to the at least two sub-channels may further be caused to perform generating an initial compensated sub-channel from a first selected sub-channel of the at least two sub-channels for the subband.

The apparatus caused to perform determining the at least one phase difference with respect to the at least two sub-channels may be caused to perform determining at least one iteration phase difference between a previous iteration compensated sub-channel and a current iteration sub-channel from the at least two sub-channels.

The current iteration channel from the at least two sub-channels may be a normalized sub-channel.

The apparatus caused to perform compensating the at least one of the at least two sub-channels based on the at least one phase difference may be caused to perform applying the determined phase difference to the current iteration sub-channel and updating an average sub-channel with the phase compensated current iteration sub-channel.

The apparatus may be further caused to perform generating a multiple-input-multiple-output precoding matrix based on the equivalent subband channel.

The apparatus may be further caused to perform generating a channel prediction based on the equivalent subband channel.

According to an aspect, there is provided a method, for determining an equivalent subband channel, the method comprising: obtaining, for the subband, at least two sub-channels; determining at least one phase difference with respect to the at least two sub-channels; compensating at least one of the at least two sub-channels based on the at least one phase difference with respect to the at least two sub-channels; and determining the equivalent subband channel based on the compensated at least one sub-channel of the at least two sub-channels.

The equivalent subband channel may be such that there is a maximization of total correlation between the equivalent subband channel and the at least two sub-channels for the subband.

The method may further comprise determining an average channel amplitude from the at least two sub-channels and wherein determining the equivalent subband channel based on the compensated at least one sub-channel of the at least two sub-channels comprises determining the equivalent subband channel further based on the average channel amplitude from the at least two sub-channels.

Determining the at least one phase difference with respect to the at least two sub-channels may comprise determining at least one direct phase difference between a first selected sub-channel from the at least two sub-channels and the remaining at least two sub-channels.

Compensating the at least one of the at least two sub-channels may comprise: determining a phase compensation matrix comprising the at least one direct phase difference located on diagonals of an identity matrix; and generating at least one compensated sub-channel based on a multiplication of a selected sub-channel of the at least two sub-channels and the phase compensation matrix.

Determining the equivalent subband channel based on the compensated at least one sub-channel of the at least two sub-channels may comprise arithmetically averaging the at least one compensated channel.

Compensating at least one of the at least two sub-channels based on the at least one phase difference with respect to the at least two sub-channels may further comprise generating an initial compensated sub-channel from a first selected sub-channel of the at least two sub-channels for the subband.

Determining the at least one phase difference with respect to the at least two sub-channels may comprise determining at least one iteration phase difference between a previous iteration compensated sub-channel and a current iteration sub-channel from the at least two sub-channels.

The current iteration channel from the at least two sub-channels may be a normalized sub-channel.

Compensating the at least one of the at least two sub-channels based on the at least one phase difference may comprise applying the determined phase difference to the current iteration sub-channel and updating an average sub-channel with the phase compensated current iteration sub-channel.

The method may further comprise generating a multiple-input-multiple-output precoding matrix based on the equivalent subband channel.

The method may further comprise generating a channel prediction based on the equivalent subband channel.

According to an aspect, there is provided a computer program, for determining an equivalent subband channel, comprising instructions stored thereon for performing at least the following: determining at least one phase difference with respect to the at least two sub-channels; compensating at least one of the at least two sub-channels based on the at least one phase difference with respect to the at least two sub-channels; and determining the equivalent subband channel based on the compensated at least one sub-channel of the at least two sub-channels.

According to an aspect, there is provided a computer program comprising instructions, which when executed by an apparatus, cause the apparatus, for determining an equivalent subband channel, to perform at least the following: obtaining, for the subband, at least two sub-channels; determining at least one phase difference with respect to the at least two sub-channels; compensating at least one of the at least two sub-channels based on the at least one phase difference with respect to the at least two sub-channels; and determining the equivalent subband channel based on the compensated at least one sub-channel of the at least two sub-channels.

According to an aspect, there is provided an apparatus for determining an equivalent subband channel, the apparatus comprising:

obtaining circuitry configured to perform obtaining, for the subband, at least two sub-channels; determining circuitry configured to perform determining at least one phase difference with respect to the at least two sub-channels; compensating circuitry configured to perform compensating at least one of the at least two sub-channels based on the at least one phase difference with respect to the at least two sub-channels; and determining circuitry configured to perform determining the equivalent subband channel based on the compensated at least one sub-channel of the at least two sub-channels..

A non-transitory computer readable medium comprising program instructions, that, when executed by an apparatus, cause the apparatus to perform the methods as described herein.

An electronic device may comprise apparatus as described herein.

In the above, various aspects have been described. It should be appreciated that further aspects may be provided by the combination of any two or more of the various aspects described above.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

List of abbreviations:

| | |
|---|---|
| AF: | Application Function |
| AMF: | Access and Mobility Management Function |
| AN: | Access Network |
| BS: | Base Station |
| CN: | Core Network |
| DL: | Downlink |
| DRX: | Discontinuous reception |
| DTX: | Discontinuous transmission |
| eNB: | eNodeB |
| gNB: | gNodeB |
| LTE: | Long Term Evolution |
| NEF: | Network Exposure Function |
| NG-RAN: | Next Generation Radio Access Network |
| NF: | Network Function |
| NR: | New Radio |
| NRF: | Network Repository Function |

| NW: | Network |
| MS: | Mobile Station |
| MNO: | Mobile network operator |
| O-RAN: | Open-Radio access network |
| PA: | Power amplifier |
| PCF | Policy Control Function |
| PLMN: | Public Land Mobile Network |
| PRB: | Physical resource block |
| QoS: | Quality of service |
| RAN: | Radio Access Network |
| RF: | Radio Frequency |
| RFIC: | RF integrated circuit |
| RIC: | RAN intelligent controller |
| RRC: | Radio resource control |
| RU: | Radio unit |
| SMF: | Session Management Function |
| SoC: | System-on-chip |
| UE: | User Equipment |
| UP: | User plane |
| UL: | Uplink |
| 3GPP: | 3rd Generation Partnership Project |
| 5G: | 5th Generation |
| 5GC: | 5G Core network |
| 5G-AN: | 5G Radio Access Network |
| 5GS: | 5G System |
| MIMO | Multiple Input Multiple Output |
| eMIMO | extreme Multiple Input Multiple Output |
| TDD | Time Division Duplex |
| SRS | Sounding Reference Signal |
| SINR | Signal-to-Interference-plus-Noise Ratio |
| PDSCH | Physical Downlink Shared Channel |

Description of Figures

Embodiments will now be described, by way of example only, with reference to the accompanying Figures in which:

Figure 1 shows a schematic representation of a 5G system;
Figure 2 shows a schematic representation of a control apparatus;
Figure 3 shows a schematic representation of a terminal;
Figure 4 shows a schematic representation of apparatus for subband channel averaging and precoding;
Figure 5 shows a flow diagram of the operations of an example subband channel averaging and precoding representation as shown in Figure 4;
Figures 6a and 6b shows a schematic representation and flow diagram of an example subband Channel averager as shown in Figure 4 in further detail according to some embodiments;
Figure 7 shows a flow diagram of operations of the example subband channel averager shown in Figure 6 according to some embodiments;
Figure 8 shows a further flow diagram of operations of the example subband channel averager shown in Figure 6 according to some embodiments; and
Figure 9 shows a schematic representation of a non-volatile memory medium storing instructions which when executed by a processor allow a processor to perform one or more of the steps of the methods shown herein.

Detailed description

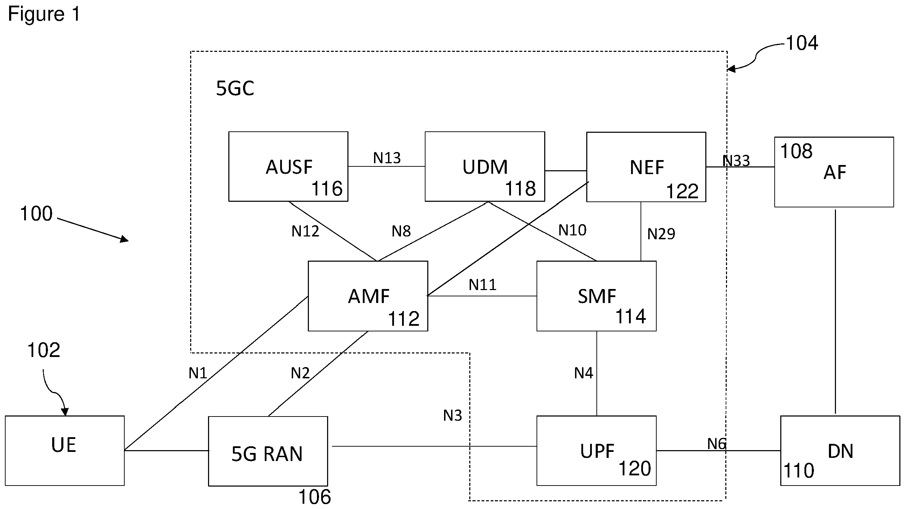

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following, certain examples are explained with reference to mobile communication devices capable of communication via a wireless cellular system and mobile communication systems serving such mobile communication devices. Before explaining in detail the examples of the disclosure, certain general principles of a wireless communication system, access systems thereof, and mobile communication devices are briefly explained with reference to Figures 1, 2 and 3 to assist in understanding the technology underlying the described examples.

Figure 1 shows a schematic representation of a wireless communication system 100. The wireless communication system 100 comprises one more devices 102 such as user equipments (UEs), or terminals. The wireless communication system 100 also comprises a 5G system (5GS), as shown in Figure. The 5GS comprises a 5G radio access network (5G-RAN) 106, a 5G core network (5GC) 104 comprising one or more network functions (NF), one or more application functions (AFs) 108, and one or more data networks (DNs) 110.

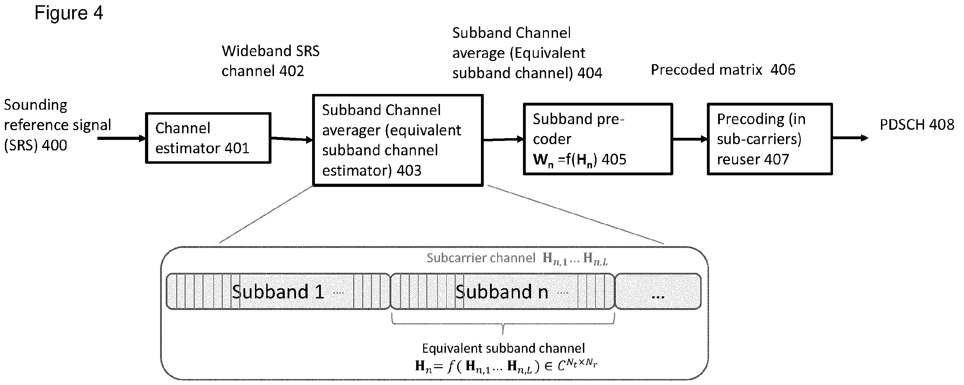

The 5G-RAN 106 may comprise one or more gNodeB (gNB) distributed unit (DU) functions connected to one or more gNodeB (gNB) centralized unit (CU) functions. The DU-CU split will be described in more detail below, alongside Figures 4a and 4b.

The 5GC 104 comprises an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 5G-advanced, 4G, 3G and other 3GPP standards such as future 3GPP technology as 6G.

In a wireless communication system 100, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a base station or access point, and transmit and/or receive communications on the carrier.

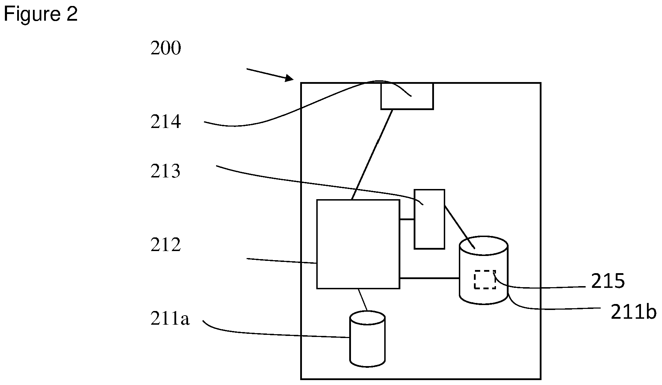

Figure 2 illustrates an example of a control apparatus 200. The control apparatus 200 may be for controlling a function of one or more network entities/network functions, such as the entities of the 5G-RAN or the 5GC as illustrated on Figure 1. The control apparatus 200 may control a DU of a 5G-RAN. A separate instance of the control apparatus 200 may control a CU of the 5G-RAN.

The control apparatus 200 comprises at least one random access memory (RAM) 211a, at least one read only memory (ROM) 211b, at least one processor 212, 213 and an input/output interface 214. The at least one processor 212, 213 is coupled to the RAM 211a and the ROM 211b. The at least one processor 212, 213 may be configured to execute an appropriate software code 215. The software code 215 may for example allow to perform one or more steps to perform one or more of the present aspects or examples. The software code 215 may be stored in the ROM 211b. The control apparatus 200 may be interconnected with another control apparatus 200 controlling another entity/function of the 5G-AN or the 5GC. In some examples, each function of the 5G-AN or the 5GC comprises a control apparatus 200. In alternative examples, two or more functions of the 5G-AN or the 5GC may share a control apparatus. The control apparatus 200 may comprise one or more circuits, or circuitry (not shown) which may be configured to perform one or more of the present aspects or examples.

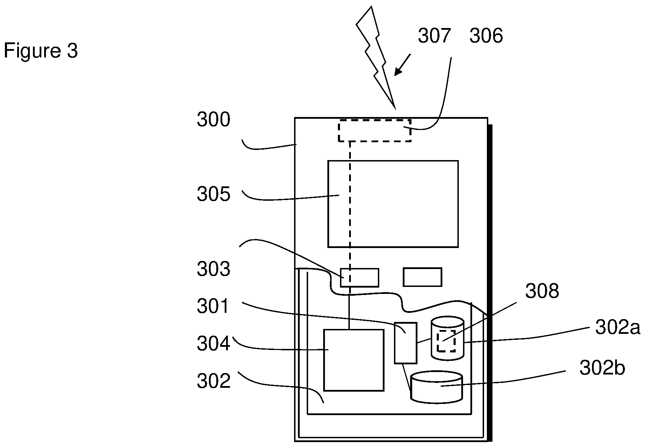

Figure 3 illustrates an example of a terminal 300, such as the UE/terminal illustrated in Figure 1. The terminal 300 may be provided by any device capable of sending and receiving radio signals. Non-limiting examples of a terminal are a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a. The terminal 300 may comprise one or more circuits, or circuitry (not shown) which may be configured to perform one or more of the present aspects or examples.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

Massive multiple input multiple output (MIMO) is an approach widely used in 5G systems and will be evolved in later systems such as 6G to extreme MIMO (eMIMO) systems with 128 or even 256 transceiver chains (in other words 128 or even 256 antenna elements). The very large number of antennas provides sufficient spatial degrees of freedom which can significantly improve the spectrum efficiency by transmitting multiple streams at the same time by using beamforming/precoding. In the following disclosure, there is no differentiation between massive and extreme MIMO systems as the following examples and embodiments can be implemented in any suitable antenna configuration. It should be noted that in extreme MIMO there is a greater need for complexity reduction.

In a closed-loop time division duplex (TDD)-mode massive MIMO system, a gNodeB (gNB) estimates an uplink wideband channel via a sounding reference signal (SRS) and designs or determines a PDSCH precoding matrix based on the SRS channel. The downlink (DL) performance of a (massive) MIMO system is therefore mainly influenced by both SRS channel estimation accuracy and the determination of the precoding matrix.

Ideally, the gNodeB designs a precoding matrix separately for each subcarrier based on subcarrier's channel estimate (in other words the 'subcarrier channel'). However, the determination of a precoding matrix for each subcarrier is computationally too complex and furthermore the signalling of each precoding matrix would require significant signalling bandwidth.

To reduce the computational cost and signalling bandwidth, the gNodeB can design a subband-level precoding matrix taking the advantage of coherence bandwidth and reuse this precoding matrix for all subcarriers within the subband. There is therefore significant research into generating an average subcarrier channel in order to determine an equivalent 'subband channel' that can be used for the subband precoder design.

As the channel response of the subcarrier channels in one subband varies over frequency the determined equivalent subcarrier channel should maintain a relatively high correlation to all the subcarrier channels within the subband. Otherwise, low post-equalization signal-to-interference-plus-noise-ratios (SINR) on some subcarrier channels may arise at the user equipment (UE) side, can consequently cause an increased block error rate and thus influence the system capacity.

The concept as discussed in the following examples and embodiments in further detail hereafter is apparatus and methods for obtaining the equivalent subcarrier channel for a subband, which maximizes the total correlation between the equivalent subcarrier channel and all the subcarrier channels for the subband.

This can in some embodiments be implemented by defining a metric and based on this metric, obtaining a subchannel averaging criterion.

The embodiments as discussed hereafter attempt to determine the channel average or equivalent subcarrier channel by employing phase compensation to reduce a phase difference between complex-valued channels. In some embodiments, as discussed later in further detail the phase compensation and channel averaging can furthermore be implemented as a phase compensation method or a phase and amplitude compensation method.

The procedure of subband channel averaging and precoding is shown with respect to Figure 4.

For example Figure 4 shows the input of the sounding reference signal (SRS) which is input to a channel estimator 401. The channel estimator 401 is configured to generate a wideband SRS channel 402 estimate comprising a plurality of sub-channels which can be passed to the subband channel averager (or equivalent subband channel estimator) 403.

The subband channel averager (or equivalent subband channel estimator) 403 is configured to obtain or receive the wideband SRS channel 402 estimate (or sub-channels or sub-carrier channels or PRB channels) and generate a subband channel estimate or equivalent subband channel estimate 404 based on the wideband SRS channel 402 estimate. Currently the equivalent subband channel estimate has been determined by using a weighted arithmetic mean with real valued weights. This real weighted arithmetic mean fails to take into account that the channel matrix comprises complex values. Thus, a real value weighted average of subcarriers channels within a subband can produce a channel amplitude and phase which does not reflect a good 'average' or equivalent, especially when there exists high frequency selective fading and/or timing offsets (in other words where the phase ramps in the frequency domain).

Another suggested approach for determining an equivalent subband channel estimate has been one of selecting the subcarrier center channel (in other words relying that the channel amplitude and phase differences have a linear relationship with frequency) and not use any averaging. This approach although having advantages with respect of computational complexity for the precoder design may not be the best 'equivalent'.

A further alternative channel averaging approach has been that of calculating the sample covariance matrix for each subcarrier channel, with a subsequent averaging of the covariance matrices within the subband. The resulting average covariance matrix thus includes the dominant (spatial) channel subspaces, which are then extracted via a suitable Eigen-decomposition or singular value decomposition (SVD). However this approach is one of significant computational complexity and is not suited for massive or extreme MIMO systems (as the dimensions of the covariance matrices and the computational complexity of the Eigen-decomposition or SVD are significant).

In the following embodiments the subband channel averager (or equivalent subband channel determiner) 403 is configured to improve of these known approaches by determining a subband channel average or equivalent subband channel 404 where there is an attempt to maximize a correlation between the equivalent subband channel and all the subcarrier channels (or sub-channels) for the subband.

This can be mathematically represented in a system where there are L subcarrier channels in the $n$-th subband, $N_r$ is the number of UE antenna ports, and $N_t$ is the number of gNB antennas.

For the $n$-th equivalent subband channel $h_{n,p}$, $p = 1.. N_r$ the maximization can therefore be formulated as

$$\max_{\boldsymbol{h}_{n,p}} \sum_{l=1}^{L} \frac{\left|\boldsymbol{h}_{n,p}^{H}\boldsymbol{h}_{n,l,p}\right|^2}{\left\|\boldsymbol{h}_{n,p}\right\|\left\|\mathbf{h}_{n,l,p}\right\|} \quad (1)$$

where $h_{n,l,p} \in C^{N_t \times 1}$, $l = 1... L$ is the p-th UE port channel vector of the l-th subcarrier channel. The maximation of the formulation (1) thus establishes that the determined or obtained equivalent subband channel has a high correlation to all the subcarrier channels within this subband.

A simplification can be to define the average norm of channel vectors as

$$A = \frac{1}{L} \sum_{l=1}^{L} \left\|\boldsymbol{h}_{n,l,p}\right\| \quad (2)$$

Then the maximization or optimization formulation can be represented as

$$\max_{\boldsymbol{h}_{n,p}} \frac{1}{A^2} \sum_{l=1}^{L} \left|\boldsymbol{h}_{n,p}^{H}\boldsymbol{h}_{n,l,p}\right|^2$$

A function $f\left(\boldsymbol{h}_{n,p}\right) = \frac{1}{A^2}\sum_{l=1}^{L}\left|\boldsymbol{h}_{n,p}^{H}\boldsymbol{h}_{n,l,p}\right|^2$ can be defined and the gradient of the function calculated as

$$\nabla f\left(\boldsymbol{h}_{n,p}\right) = \sum_{l=1}^{L} \boldsymbol{h}_{n,l,p} \frac{\boldsymbol{h}_{n,l,p}^{H}}{A} \frac{\boldsymbol{h}_{n,p}}{A}$$

$$\nabla f\left(\boldsymbol{h}_{n,p}\right) = \sum_{l=1}^{L} \boldsymbol{h}_{n,l,p} \overline{\boldsymbol{h}}_{n,l,p}^{H} \overline{\boldsymbol{h}}_{n,l,p}$$

where

$$\overline{\boldsymbol{h}}_{n,l,p}^{H} = \frac{\boldsymbol{h}_{n,l,p}^{H}}{A}, \overline{\boldsymbol{h}}_{n,l,p} = \frac{\boldsymbol{h}_{n,p}}{A}.$$

An example approach for obtaining the equivalent subband channel can implement a gradient ascending approach using the above optimization formula. The gradient ascending approach is an iterative method where all of the channels L are used to obtain the average or equivalent subband channel $h_{avg,n,p}$ , based on the following equation.

$$h_{avg,n,p}(l) = h_{avg,n,p}(l-1) + \alpha h_{n,l,p} \overline{h}_{n,l,p}^{H} * \overline{h}_{avg,n,p}(l-1), l = 2 \dots L \ (3)$$

$$\overline{h}_{avg,n,p}(l-1) = \frac{h_{avg,n,p}(l-1)}{\|h_{avg,n,p}(l-1)\|}$$

where $\alpha$ controls step size for gradient ascending.

As can be seen in the above equation. There is a first step or aspect where the phase difference is determined $\overline{h}_{n,l,p}^{H} * \overline{h}_{avg,n,p}(l-1)$ , and then a second step or aspect where a phase compensation (based on the determined phase difference) is applied to $h_{n,l,p}$.

Then after the phase compensation operation an arithmetic mean can be used between two complex-valued channel vectors.

The subband channel average/equivalent subband channel estimate 404 is passed to the subband pre-coder 405 which is configured to generate a pre-coded matrix 406 based on the equivalent subband channel estimate 404 based on any suitable method.

The precoded matrix 406 can then be passed to the precoding (in sub-carriers) reuser 407 which is configured to generate the PDSCH 408 based on the precoded matrix 406 according to any suitable known method.

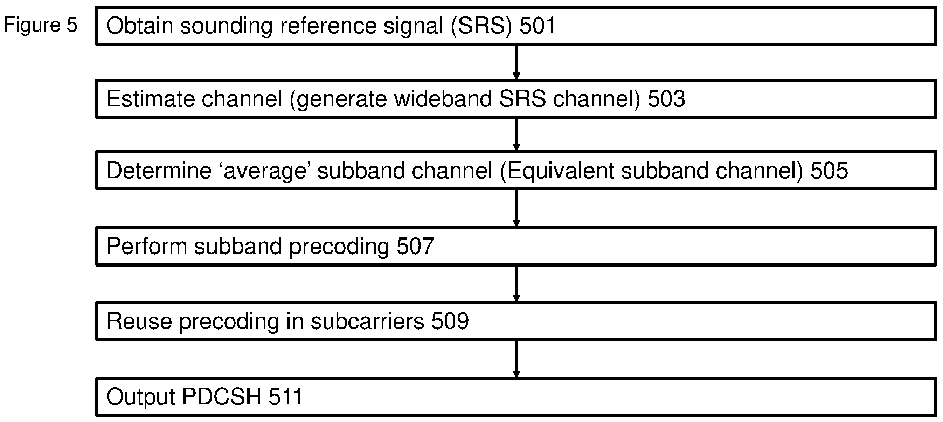

The operations of the subband channel averager and precoder as shown in Figure 4 are further summarized in Figure 5.

A first operation is one of obtaining sounding reference signal (SRS) as shown in Figure 5 by 501.

Then there is an operation of estimating a channel (in that there is generated a wideband SRS channel) as shown in Figure 5 by 503.

Then is the operation of determining an 'average' sub-band channel (or equivalent subband channel estimate) as shown in Figure 5 by 505.

Having determined the 'average' sub-band channel, then is performed the operation of performing sub-band precoding as shown in Figure 5 by step 507.

Then the precoding is reused in the subcarriers as shown in Figure 5 by step 509.

Then having reused the subcarriers to generate the PDSCH the PDSCH is output as shown in Figure 5 by step 511.

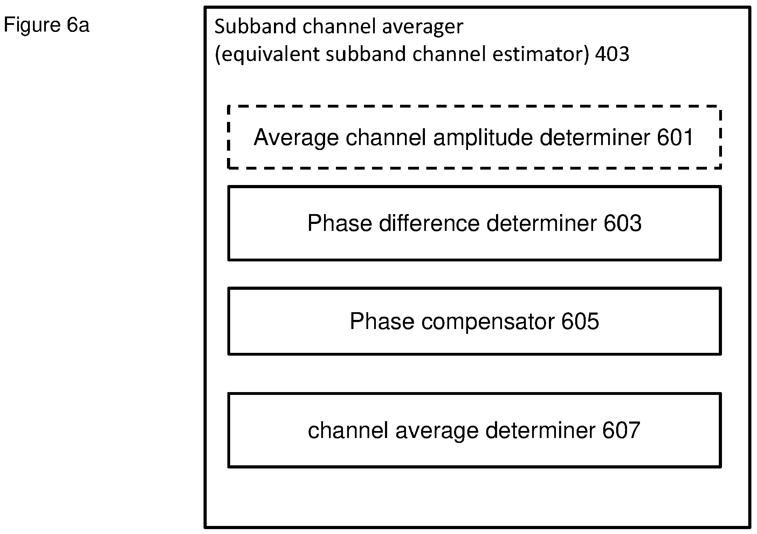

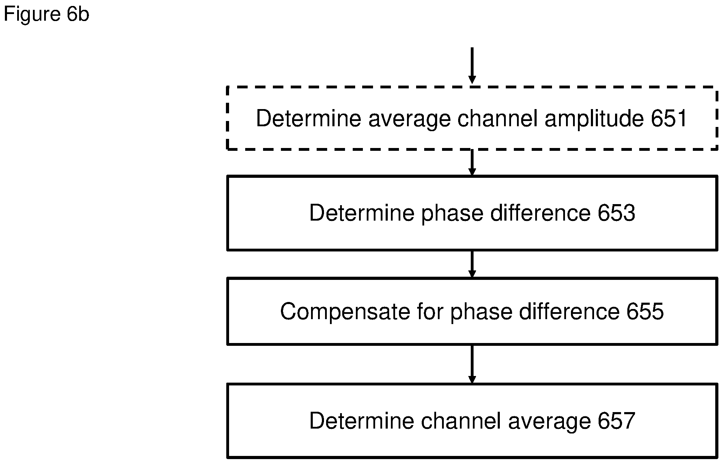

With respect to Figure 6a is shown a schematic view of an example subband channel averager (or equivalent subband channel estimator) 403 in further detail according to some embodiments. Furthermore Figure 6b shows a summary of the operations of the example subband channel averager or equivalent subband channel estermator.

For example the subband channel averager or equivalent subband channel estimator 403 comprises an optional average channel amplitude determiner 601. The average channel amplitude determiner 601 is configured to determine an average channel amplitude (or in other words generate an average norm of channel vectors). As discussed above the average channel amplitude A can be represented by the following

$$A = \frac{1}{L} \sum_{l=1}^{L} \|h_{n,l,p}\|$$

Thus with respect to Figure 6b is shown an optional operation of determining the average channel amplitude as shown by 651.

In some embodiments the subband channel averager or equivalent subband channel estimator 403 comprises a phase difference determiner 603. The phase difference determiner 603 can be an iterative difference determiner configured to determine a phase difference between a subchannel I and current average (for all subchannels upto I)

$$\varphi = \overline{h}_{n,l,p}^{H} * \overline{h}_{avg,n,p}(l-1)$$

In some embodiments the phase difference determiner 603 can be a direct phase difference determiner configured to determine a phase difference based on the following representation

$$\phi_{n,l,p} = \frac{{h_{n,l,p}}^H h_{n,1,p}}{\|h_{n,1,p}\| \|h_{n,l,p}\|}$$

Thus with respect to Figure 6b is shown an operation of determining the phase difference as shown by 653.

In some embodiments the subband channel averager or equivalent subband channel estimator 403 comprises a phase compensator 605. The phase compensator uses the phase differences to determine phase compensation.

In some embodiments the phase compensator 605 is an iterative phase compensator configured to apply a phase compensation based on the iterative phase difference to a 'current' iteration of the current subband channel average/equivalent subband channel.

$$h_{avg,n,p}(l) = h_{avg,n,p}(l-1) + \alpha h_{n,l,p}\,\varphi$$

In some embodiments the phase compensation is a direct compensation, for example obtain or determine a phase matrix

$$\Phi_{n,l} = \begin{bmatrix} \phi_{n,l,1} & 0 & 0 \\ 0 & \ddots & 0 \\ 0 & 0 & \phi_{n,l,N_r} \end{bmatrix}$$

and then apply the phase matrix to the obtained channels to generate phase compensated channels.

$$\widehat{H}_{n,l} = \mathbf{H}_{n,l}{}^* \Phi_{n,l}$$

Thus with respect to Figure 6b is shown an operation of phase compensating as shown by 655.

In some embodiments the subband channel averager or equivalent subband channel estimator 403 comprises a channel average determiner 607.

The channel average determiner 607 when operating in an iteration mode is configured to generate the subband channel average (or the equivalent subband channel) based on the last updated iteration of the phase compensation $h_{avg,n,p}(L)$ and then apply the average channel amplitude.

This can be represented by the following formulation:

$$h_{n,p} = A * \frac{h_{avg,n,p}(L)}{\|h_{avg,n,p}(L)\|}$$

Thus with respect to Figure 6b is shown an operation of determining the channel average or equivalent subband channel estimate as shown by 657.

In some embodiments the channel average determiner 607 when operating in a direct determination mode is configured to generate the subband channel average (or the equivalent subband channel) based on an arithmetic mean of the phase compensated channel values and can be implemented by the following:

$$\mathbf{H}_n = \frac{1}{L} \sum_{l=1}^{L} \widehat{H}_{n,l}$$

In other words in some embodiments the determination of the equivalent subband channel or channel averaging can in some embodiments be implemented by direct application of phase difference and phase compensation to the obtained channels by directly calculating a phase difference between $h_{n,l,p}, l = 2..L$ *and* $h_{n,l,p}$ and compensate phase difference to $h_{n,l,p}, l = 2..L$. Then, the 'average' or equivalent subband channel can be obtained via arithmetic mean of the phase compensated channels.

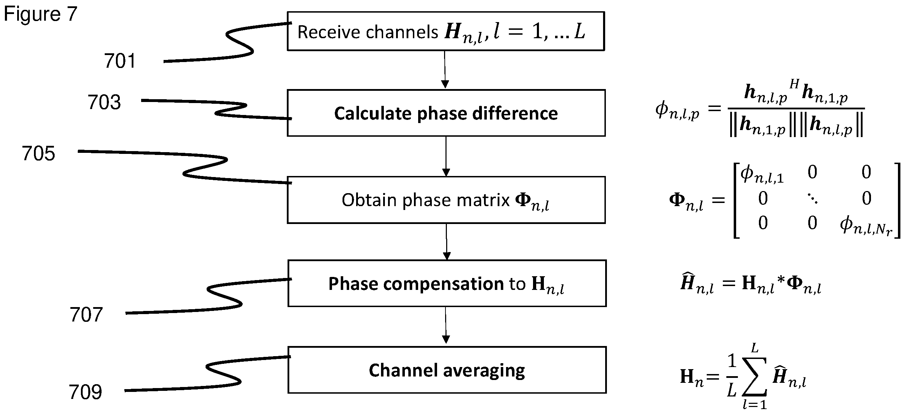

This can be represented by the flow diagram as shown in Figure 7.

The initial operation is one of receiving the channels $H_{n,l}$, $l = 1, ...L$ as shown in Figure 7 by step 701.

Having obtained the channels then the phase difference is determined with respect to the first subchannel. This can, as indicated above, be represented as

$$\phi_{n,l,p} = \frac{{\boldsymbol{h}_{n,l,p}}^{H}\boldsymbol{h}_{n,1,p}}{\left\|\boldsymbol{h}_{n,1,p}\right\|\left\|\boldsymbol{h}_{n,l,p}\right\|}$$

and shown in Figure 7 by step 703.

Then having determined the phase differences a phase matrix is generated as shown in Figure 7 by step 705. The phase matrix can be generated as the identity matrix where the diagonal components replaced with associated phase differences such like the following

$$\boldsymbol{\Phi}_{n,l} = \begin{bmatrix} \phi_{n,l,1} & 0 & 0 \\ 0 & \ddots & 0 \\ 0 & 0 & \phi_{n,l,N_r} \end{bmatrix}$$

Then the phase matrix can be applied to the received channels as an application of phase compensation. This can be shown in Figure 7 by step 707. The application of the phase matrix to the received channels can be shown as:

$$\widehat{H}_{n,l} = \mathbf{H}_{n,l}{}^{*}\boldsymbol{\Phi}_{n,l}$$

Then there is the arithmetic averaging of the phase compensated channels in order to determine the equivalent subband channel or channel average as shown in Figure 7 by step 709. The arithmetic averaging operation can for example be as follows

$$\mathbf{H}_n = \frac{1}{L}\sum_{l=1}^{L}\widehat{H}_{n,l}$$

Furthermore in some embodiments the determination of the equivalent subband channel or channel average can be an iterative application of the phase compensation. In other words to iteratively compensate phase difference to $h_{n,l,p}$ and update $h_{avg,n,p}(l)$ until obtaining or determining a final value for $h_{avg,n,p}(L)$. Then the equivalent subband channel or channel average is given as

$$\boldsymbol{h}_{n,p} = A * \frac{\boldsymbol{h}_{avg,n,p}(L)}{\left\|\boldsymbol{h}_{avg,n,p}(L)\right\|} \quad (5)$$

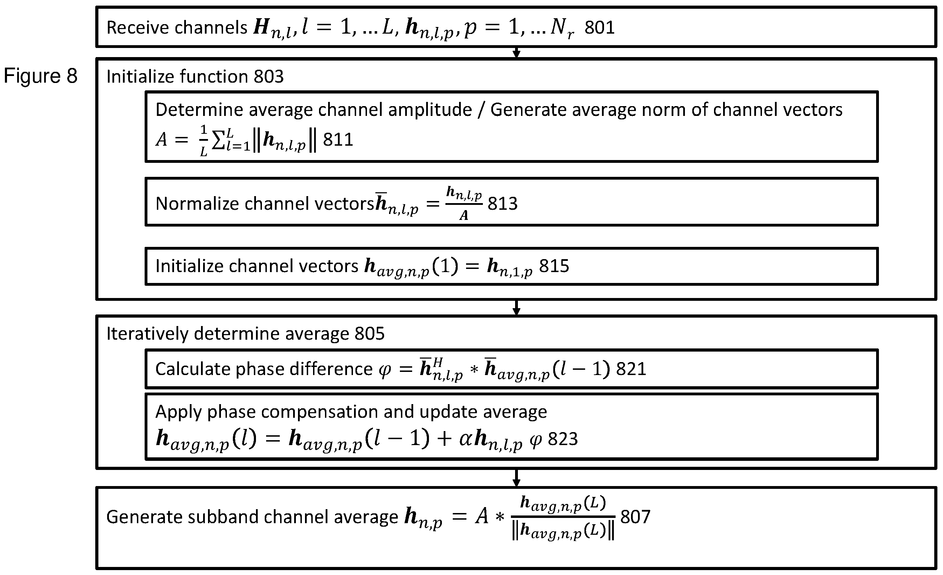

This iterative application can be shown in further detail with respect to Figure 8.

Thus is shown an operation of receiving or otherwise obtaining channels $H_{n,l}$, $l = 1, ... L$, $h_{n,l,p}$, $p = 1, ... Nr$ as shown in Figure 8 by step 801.

Then there can be an initialization operation where the function is initialized as shown in Figure 8 by step 803.

The initialization operation can furthermore be divided into a first operation of determining an average channel amplitude or otherwise generating the average norm of channel vectors which can be shown in Figure 8 by step 811. The generation of the average channel amplitude or otherwise generating the average norm of channel vectors can be represented as

$$A = \frac{1}{L}\sum_{l=1}^{L}\left\|\boldsymbol{h}_{n,l,p}\right\|$$

The initialization operation can furthermore comprise the operation of normalizing the channel vectors as shown in Figure 8 by step 813. The normalization of the channel vectors can be represented as

$$\overline{h}_{n,l,p} = \frac{h_{n,l,p}}{A}$$

Then an initial channel vector can be generated for the iterative process. The generation of the initial channel vector is shown in Figure 8 by step 815. The initial channel vector can, for example, be generated as:

$$h_{avg,n,p}(1) = h_{n,1,p}$$

These initialized values can then be used to iteratively determine the average channel as shown in Figure 8 by step 805.

The iterative determination can be divided into a series of operations. For example the first is one of calculating the phase difference as shown in Figure 8 by step 821. The phase difference determination can be represented as:

$$\varphi = \overline{h}_{n,l,p}^{H} * \overline{h}_{avg,n,p}(l-1)$$

Then this phase difference determination can be applied to the current iteration average to generate an updated average as shown in Figure 8 by step 823. The updating of the average by the phase compensation can be shown by the following:

$$h_{avg,n,p}(l) = h_{avg,n,p}(l-1) + \alpha h_{n,l,p} \varphi$$

This iterative process is continued until

$$l = L$$

and a value of $h_{avg,n,p}(L)$ is generated.

Then in some embodiments an amplitude compensation is performed in order to generate the subband channel average as shown in Figure 8 by step 807. This can be represented as the following:

$$h_{n,p} = A * \frac{h_{avg,n,p}(L)}{\|h_{avg,n,p}(L)\|}$$

Simulations have shown that the obtained equivalent channel has a higher and more stable correlation to subcarrier channels within a subband than heuristic methods currently used. It improves system throughput and allows larger subband sizes (i.e., higher number of PRBs in one subband) which decreases the computational cost for gNodeB.

Although the above embodiments and examples are shown with respect to the determination of the equivalent subband for the estimation of a MIMO precoding matrix the approaches shown above can be implemented in some embodiments to determine an equivalent subband can be used for channel prediction and other physical layer algorithms.

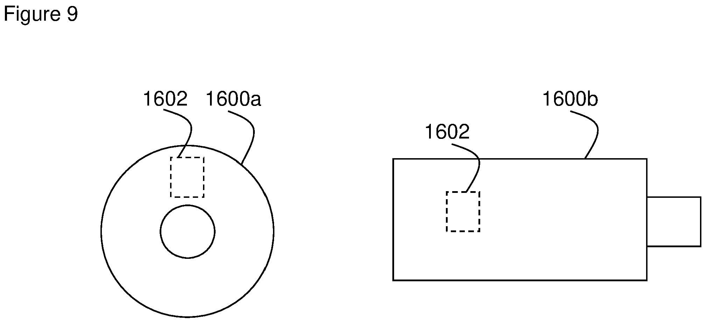

Figure 9 shows a schematic representation of non-volatile memory media 1600a (e.g. computer disc (CD) or digital versatile disc (DVD)) and 1600b (e.g. universal serial bus (USB) memory stick) storing instructions and/or parameters 1602 which when executed by a processor allow the processor to perform one or more of the steps of the methods of Figure 5, Figure 7 or Figure 8.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The term "non-transitory", as used herein, is a limitation of the medium itself (i.e. tangible, not a signal) as opposed to a limitation on data storage persistency (e.g. RAM vs ROM).

As used herein, "at least one of the following:<a list of two or more elements>" and "at least one of: <a list of two or more elements>" and similar wording, where the list of two or more elements are joined by "and", or "or", mean at least any one of the elements, or at least any two or more of the elements, or at least all of the elements.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:

(a) hardware-only circuit implementations (such as implementations in only analogue and/or digital circuitry);
(b) combinations of hardware circuits and software, such as:

(i) a combination of analogue and/or digital hardware circuit(s) with software/firmware and
(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device. The term circuitry also covers, for example and if applicable to the particular claim element, a baseband integrated circuit or processor integrated circuit for a mobile device or a similar integrated circuit in a server, a cellular network device, or other computing or network device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. A method for determining an equivalent subband channel, the method comprising:

obtaining, for the subband, at least two sub-channels;
determining (653) at least one phase difference with respect to the at least two sub-channels;
compensating (655) at least one of the at least two sub-channels based on the at least one phase difference with respect to the at least two sub-channels; and
determining (657) the equivalent subband channel based on the compensated at least one sub-channel of the at least two sub-channels.

2. The method as claimed in claim 1, wherein the equivalent subband channel is determined such that there is a maximization of total correlation between the equivalent subband channel and the at least two sub-channels for the subband.

3.  The method as claimed in any of claims 1 or 2, further comprising determining (651, 811) an average channel amplitude from the at least two sub-channels and wherein determining (657) the equivalent subband channel based on the compensated at least one sub-channel of the at least two sub-channels comprises determining (807) the equivalent subband channel further based on the average channel amplitude from the at least two sub-channels.

4.  The method as claimed in any of claims 1 to 3, wherein determining (653) the at least one phase difference with respect to the at least two sub-channels comprises determining (703) at least one direct phase difference between a first selected sub-channel from the at least two sub-channels and the remaining at least two sub-channels.

5.  The method as claimed in claim 4, wherein compensating (655) the at least one of the at least two sub-channels comprises:

    determining (705) a phase compensation matrix comprising the at least one direct phase difference located on diagonals of an identity matrix; and
    generating (707) at least one compensated sub-channel based on a multiplication of a selected sub-channel of the at least two sub-channels and the phase compensation matrix.

6.  The method as claimed in claim 5, wherein determining (657) the equivalent subband channel based on the compensated at least one sub-channel of the at least two sub-channels comprises arithmetically averaging (709) the at least one compensated channel.

7.  The method as claimed in any of claims 1 to 3, wherein compensating (655) at least one of the at least two sub-channels based on the at least one phase difference with respect to the at least two sub-channels further comprises generating (815) an initial compensated sub-channel from a first selected sub-channel of the at least two sub-channels for the subband.

8.  The method as claimed in claim 7, wherein determining (653) the at least one phase difference with respect to the at least two sub-channels comprises determining (821) at least one iteration phase difference between a previous iteration compensated sub-channel and a current iteration sub-channel from the at least two sub-channels.

9.  The method as claimed in claim 8, wherein the current iteration channel from the at least two sub-channels is a normalized sub-channel.

10. The method as claimed in any of claims 8 or 9, wherein compensating (655) the at least one of the at least two sub-channels based on the at least one phase difference comprises applying (823) the determined phase difference to the current iteration sub-channel and updating an average sub-channel with the phase compensated current iteration sub-channel.

11. The method as claimed in any of claims 1 to 10, further comprising generating a multiple-input-multiple-output precoding matrix based on the equivalent subband channel.

12. The method as claimed in any of claims 1 to 10, further comprising generating a channel prediction based on the equivalent subband channel.

13. An apparatus comprising means for performing the method as claimed in any of claims 1 to 12.

14. An apparatus comprising at least one processor and at least one memory storing instructions that, when executed by the at least one processor, cause the apparatus at least to perform the method as claimed in any of claims 1 to 12.

Figure 1

EP 4 498 644 A1

Figure 2

200

214

213

212

211a

215

211b

Figure 3

Figure 4

Sounding reference signal (SRS) 400 → Channel estimator 401 → | Subband Channel averager (equivalent subband channel estimator) 403 | → | Subband pre-coder $W_n = f(H_n)$ 405 | → | Precoding (in sub-carriers) reuser 407 | → PDSCH 408

Wideband SRS channel 402

Subband Channel average (Equivalent subband channel) 404

Precoded matrix 406

Subcarrier channel $H_{n,1} \dots H_{n,L}$

Subband 1 $\dots$ | Subband n $\dots$ | $\dots$

Equivalent subband channel
$$H_n = f(H_{n,1} \dots H_{n,L}) \in C^{N_t \times N_r}$$

EP 4 498 644 A1

Figure 5

| Obtain sounding reference signal (SRS) 501 |

↓

| Estimate channel (generate wideband SRS channel) 503 |

↓

| Determine 'average' subband channel (Equivalent subband channel) 505 |

↓

| Perform subband precoding 507 |

↓

| Reuse precoding in subcarriers 509 |

↓

| Output PDCSH 511 |

EP 4 498 644 A1

Figure 6a

EP 4 498 644 A1

Subband channel averager
(equivalent subband channel estimator) 403

Average channel amplitude determiner 601

Phase difference determiner 603

Phase compensator 605

channel average determiner 607

Figure 6b

```
         ┌─ ─ ─ ─ ─ ─ ─ ─ ─ ─ ─ ─ ─ ─ ─ ─ ─ ─ ─ ─ ─ ┐
         |   Determine average channel amplitude 651  |
         └─ ─ ─ ─ ─ ─ ─ ─ ─ ─ ─ ─ ─ ─ ─ ─ ─ ─ ─ ─ ─ ┘

         ┌─────────────────────────────────────────────┐
         │         Determine phase difference 653        │
         └─────────────────────────────────────────────┘

         ┌─────────────────────────────────────────────┐
         │      Compensate for phase difference 655      │
         └─────────────────────────────────────────────┘

         ┌─────────────────────────────────────────────┐
         │         Determine channel average 657         │
         └─────────────────────────────────────────────┘
```

EP 4 498 644 A1

Figure 7

Receive channels $\boldsymbol{H}_{n,l}, l = 1, \ldots L$

701

703

Calculate phase difference

$$\phi_{n,l,p} = \frac{\boldsymbol{h}_{n,l,p}^{H} \boldsymbol{h}_{n,1,p}}{\|\boldsymbol{h}_{n,1,p}\| \|\boldsymbol{h}_{n,l,p}\|}$$

705

Obtain phase matrix $\boldsymbol{\Phi}_{n,l}$

$$\boldsymbol{\Phi}_{n,l} = \begin{bmatrix} \phi_{n,l,1} & 0 & 0 \\ 0 & \ddots & 0 \\ 0 & 0 & \phi_{n,l,N_r} \end{bmatrix}$$

Phase compensation to $\mathbf{H}_{n,l}$

$$\widehat{\boldsymbol{H}}_{n,l} = \mathbf{H}_{n,l} * \boldsymbol{\Phi}_{n,l}$$

707

Channel averaging

$$\mathbf{H}_n = \frac{1}{L} \sum_{l=1}^{L} \widehat{\boldsymbol{H}}_{n,l}$$

709

**Figure 8**

Receive channels $H_{n,l}, l = 1, \dots L, h_{n,l,p}, p = 1, \dots N_r$  801

Initialize function 803

> Determine average channel amplitude / Generate average norm of channel vectors
> $$A = \frac{1}{L}\sum_{l=1}^{L}\|h_{n,l,p}\| \; 811$$

> Normalize channel vectors $\overline{h}_{n,l,p} = \frac{h_{n,l,p}}{A}$  813

> Initialize channel vectors $h_{avg,n,p}(1) = h_{n,1,p}$  815

Iteratively determine average 805

> Calculate phase difference $\varphi = \overline{h}_{n,l,p}^{H} * \overline{h}_{avg,n,p}(l-1)$  821

> Apply phase compensation and update average
> $$h_{avg,n,p}(l) = h_{avg,n,p}(l-1) + \alpha h_{n,l,p}\, \varphi \; 823$$

Generate subband channel average $h_{n,p} = A * \dfrac{h_{avg,n,p}(L)}{\|h_{avg,n,p}(L)\|}$  807

Figure 9

1600b

1602

1602  1600a

Europäisches
Patentamt

European
Patent Office

Office européen
des brevets

# EUROPEAN SEARCH REPORT

Application Number

**EP 23 18 7979**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/043882 A1 (SHEN XUQIANG [CN] ET AL) 11 February 2016 (2016-02-11) * paragraph [0022] – paragraph [0027] * ----- | 1-14 | INV. H04L25/02 |
| X | US 8 611 476 B1 (NABAR ROHIT U [US] ET AL) 17 December 2013 (2013-12-17) * column 3 * ----- | 1-14 | |
| X | US 2023/038585 A1 (TSUI ERNEST [US] ET AL) 9 February 2023 (2023-02-09) * paragraph [0108] – paragraph [0114] * ----- | 1-14 | |
| A | US 2009/067520 A1 (GALLIZIO EDOARDO [IT] ET AL) 12 March 2009 (2009-03-12) * paragraph [0055] * ----- | 3 | |
| A | NADA ABD EL-RAHMAN ET AL: "A Comparative Study of PMI/RI Selection Schemes for LTE/LTEA Systems", IEEE TRANSACTIONS ON VEHICULAR TECHNOLOGY, IEEE, USA, vol. 67, no. 2, 1 February 2018 (2018-02-01), pages 1444-1453, XP011677703, ISSN: 0018-9545, DOI: 10.1109/TVT.2017.2759205 [retrieved on 2018-02-15] * Section I * ----- | 11 | **TECHNICAL FIELDS SEARCHED (IPC)** H04L |

The present search report has been drawn up for all claims

| Place of search | Date of completion of the search | Examiner |
|---|---|---|
| Munich | 26 January 2024 | Epple, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 7979

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2024

| Patent document cited in search report | | Publication date | Patent family member(s) | | Publication date |
|---|---|---|---|---|---|
| US 2016043882 | A1 | 11-02-2016 | CN | 104104623 A | 15-10-2014 |
| | | | US | 2016043882 A1 | 11-02-2016 |
| | | | WO | 2014166164 A1 | 16-10-2014 |
| US 8611476 | B1 | 17-12-2013 | US | 8040982 B1 | 18-10-2011 |
| | | | US | 8331502 B1 | 11-12-2012 |
| | | | US | 8611476 B1 | 17-12-2013 |
| US 2023038585 | A1 | 09-02-2023 | US | 2022278448 A1 | 01-09-2022 |
| | | | US | 2022278713 A1 | 01-09-2022 |
| | | | US | 2022278714 A1 | 01-09-2022 |
| | | | US | 2022278715 A1 | 01-09-2022 |
| | | | US | 2022278717 A1 | 01-09-2022 |
| | | | US | 2022278729 A1 | 01-09-2022 |
| | | | US | 2022278730 A1 | 01-09-2022 |
| | | | US | 2022278792 A1 | 01-09-2022 |
| | | | US | 2022278793 A1 | 01-09-2022 |
| | | | US | 2022278875 A1 | 01-09-2022 |
| | | | US | 2022279452 A1 | 01-09-2022 |
| | | | US | 2022279501 A1 | 01-09-2022 |
| | | | US | 2022279520 A1 | 01-09-2022 |
| | | | US | 2022279535 A1 | 01-09-2022 |
| | | | US | 2023029375 A1 | 26-01-2023 |
| | | | US | 2023038585 A1 | 09-02-2023 |
| | | | US | 2023044335 A1 | 09-02-2023 |
| | | | US | 2023050488 A1 | 16-02-2023 |
| | | | US | 2023164003 A1 | 25-05-2023 |
| | | | US | 2023198813 A1 | 22-06-2023 |
| US 2009067520 | A1 | 12-03-2009 | NONE | | |

EPO FORM P0459

For more details about this annex : see Official Journal of the European Patent Office, No. 12/82